# EUROPÄISCHE PATENTSCHRIFT

(11) **EP 2 168 224 B1**
(45) Veröffentlichungstag und Bekanntmachung des Hinweises auf die Patenterteilung: **31.08.2016**
(21) Anmeldenummer: 08775018.8
(22) Anmeldetag: 11.07.2008
(51) Int. Cl.: H02J 9/08

(54) **VERFAHREN UND VORRICHTUNG ZUR ZUSCHALTUNG EINES VON EINEM DIESELMOTOR ANGETRIEBENEN GENERATORS ZU EINEM ELEKTRISCHEN NETZ**
METHOD AND APPARATUS FOR CONNECTION OF A GENERATOR, WHICH IS DRIVEN BY A DIESEL ENGINE, TO AN ELECTRICAL POWER SUPPLY SYSTEM
PROCÉDÉ ET DISPOSITIF PERMETTANT DE RACCORDER UN GÉNÉRATEUR, ENTRAÎNÉ PAR UN MOTEUR DIESEL, À UN RÉSEAU ÉLECTRIQUE

(30) Priorität: 20.07.2007 DE 102007034472
(43) Veröffentlichungstag der Anmeldung: 31.03.2010
(73) Patentinhaber: Siemens Aktiengesellschaft, 80333 München (DE)
(72) Erfinder: FLACH, Michael, 24568 Kaltenkirchen (DE); KAHLE, Jens, 22851 Norderstedt (DE); WILLER, Hans-Peter, 21266 Jesteburg (DE)
(86) Internationale Anmeldenummer: PCT/EP2008/059101
(87) Internationale Veröffentlichungsnummer: WO 2009/013155

(56) Entgegenhaltungen:
- DE-A1- 19 620 586
- JP-A- 1 194 900
- JP-A- 6 245 390

## Beschreibung

Die Erfindung betrifft ein Verfahren und eine Vorrichtung zur Zuschaltung eines von einem ersten Dieselmotor angetriebenen ersten Generators zu einem elektrischen Netz, insbesondere einem Bordnetz eines Schiffes, wobei das elektrische Netz von einem zweiten Generator gespeist wird, der von einem zweiten Dieselmotor angetrieben wird; ein derartiges Verfahren und eine derartige Vorrichtung sind beispielsweise durch die WO 2002/061916 A1 bekannt.

Weiterhin ist aus der DE 196 20 586 A1 eine unterbrechungsfreie Stromversorgungsanlage an Bord von Schiffen bekannt, bei der mindestens zwei von Dieselmotoren angetriebene Generatoren mit einer Synchronisierleitung zur Synchronisierung von Phase und Frequenz miteinander verbunden sind.

In Anlagen mit mehreren Dieselgeneratoren, die auf einem schwingungsfähigem Untergrund installiert sind, besteht das Problem, dass nach einer Zuschaltung eines ersten Dieselgenerators zu einem elektrischen Netz, das bereits von einem zweiten Dieselgenerator gespeist wird, in Abhängigkeit von der relativen Stellung der Kolben der beiden Dieselgeneratoren zueinander Vibrationen auftreten können, die sich in der Anlage störend bemerkbar machen können.

Dies gilt insbesondere in Schiffen, für deren Bordnetze zur Erhöhung der Ausfallsicherheit und zur effizienten Energieerzeugung jeweils mehrere Dieselgeneratoren zur parallelen Einspeisung in das Bordnetz vorgesehen sind, die je nach Leistungsbedarf dem Bordnetz zu- oder von dem Bordnetz weggeschaltet werden. Häufig sind an Bord von Schiffen jeweils zwei Dieselgeneratoren in einem gemeinsamen Raum angeordnet. Wenn nun ein erster Dieselgenerator zusätzlich zu einem zweiten Dieselgenerator auf das Netz synchronisiert und zugeschaltet wird und sich dabei beide Dieselgeneratoren im gleichen Raum befinden, so können verstärkte Vibrationen auftreten, die sich in mehreren Sektionen des Schiffes bemerkbar machen können. Wie sich herausgestellt hat, treten diese Vibrationen dann auf, wenn die Kolben der beiden Diesel eine bestimmte Stellung zu zueinander haben. Diese Vibrationen sind dann dauerhaft auch nach der Zuschaltung vorhanden, da beide Dieselgeneratoren nach der Synchronisierung aufgrund des gemeinsamen elektrischen Netzes elektrisch starr miteinander verbunden sind.

Es ist deshalb Aufgabe vorliegender Erfindung, ein Verfahren und eine Vorrichtung gemäß Oberbegriff des Patentanspruchs 1 bzw. Patentanspruchs 9 derart zu verbessern, dass solche unerwünschten Vibrationen sicher vermieden werden können.

Die Lösung der auf das Verfahren gerichteten Aufgabe gelingt durch ein Verfahren gemäß Patentanspruch 1. Vorteilhafte Ausgestaltungen sind jeweils Gegenstand der Unteransprüche 2 bis 8.

Die Lösung der auf die Vorrichtung gerichteten Aufgabe gelingt durch eine Vorrichtung gemäß Patentanspruch 9. Vorteilhafte Ausgestaltungen sind jeweils Gegenstand der Unteransprüche 10 bis 17.

Das erfindungsgemäße Verfahren sieht vor, dass der Zeitpunkt der Zuschaltung zusätzlich in Abhängigkeit von der relativen Stellung und Bewegungsrichtung eines Kolbens des ersten Dieselmotors in Bezug auf die Stellung und Bewegungsrichtung eines Kolbens des zweiten Dieselmotors gewählt wird.

Es kann somit verhindert werden, dass eine Zuschaltung des ersten Generators bei kritischen relativen Stellungen und Bewegungsrichtungen der beiden Kolben zueinander, d.h. bei relativen Stellungen und Bewegungsrichtungen zueinander, bei denen unerwünschte Vibrationen auftreten, erfolgt. Durch eine elektrisch starre Verbindung der Dieselgeneratoren miteinander über eine Art "elektrische Welle" nach der Zuschaltung wird dann auch verhindert, dass sich diese kritischen Stellungen und Bewegungsrichtungen zu einem späteren Zeitpunkt nach dem Zuschalten einstellen.

Die Vibrationen können dadurch wirkungsvoll verhindert werden, dass zum Zeitpunkt der Zuschaltung die relativen Stellungen der Kolben zueinander in einem vorgegebenen Bereich liegen.

Eine besonders wirkungsvolle Verhinderung der Vibrationen ist dadurch möglich, dass zum Zeitpunkt der Zuschaltung die beiden Kolben genau gegenläufig sind, d.h. die Stellungen der Kolben zueinander um genau 180° phasenverschoben sind.

Der optimale Zuschaltpunkt ist somit bei einer Phasenverschiebung von 180°, jedoch ergibt sich auch eine gute Vibrationsunterdrückung in einem größeren Bereich um 180°, insbesondere in einem Bereich der Phasenverschiebung von 150° bis 210°, d.h. die beiden Kolben sind zueinander mit einer Abweichung von maximal 30° gegenläufig.

Von Vorteil sind zum Zeitpunkt der Zuschaltung die Phasenlage der Ausgangsspannung des ersten Generators und die Phasenlage der Netzspannung gleich.

Bevorzugt liegt zum Zeitpunkt der Zuschaltung die Differenz zwischen der Frequenz der Ausgangsspannung und der Frequenz der Netzspannung innerhalb eines vorgebbaren Bereiches, insbesondere zwischen 0,5 und 0,15 Hz.

Die Zuschaltung kann hierbei besonders einfach durch ein Schließen eines Schalters zwischen einem elektrischen Ausgang des ersten Generators und dem Netz erfolgten.

Von Vorteil wird der Schalter hierbei nach Empfang eines Zuschaltsignales geschlossen, wobei bei der Generierung des Zuschaltsignales eine Eigenzeit des Schalters berücksichtigt wird.

Um im Notfall eine schnellstmögliche Zuschaltung, auch unter Inkaufnahme verstärkter Vibrationen, zu ermöglichen, kann die Abhängigkeit des Zeitpunktes der Zuschaltung von der relativen Stellung und Bewegungsrichtung des Kolbens des ersten Dieselmotors in Bezug auf die Stellung und Bewegungsrichtung des Kolbens des zweiten Dieselmotors von Vorteil auch deaktiviert werden.

Eine erfindungsgemäße Vorrichtung zur Zuschaltung eines von einem ersten Dieselmotor angetriebenen ersten Generators zu einem elektrischen Netz, insbesondere einem Bordnetz eines Schiffes, wobei das elektrische Netz von einem zweiten Generator gespeist wird, der von einem zweiten Dieselmotor angetrieben wird, umfasst
- eine Synchronisiereinrichtung, durch die die Frequenz und Phasenlage der Ausgangsspannung des ersten Generators in Bezug auf die Frequenz und Phasenlage der Netzspannung durch Veränderung der Drehzahl des ersten Dieselmotors auf Werte einstellbar ist, die innerhalb vorgegebener Grenzen liegen, und durch die ein Synchronisiersignal nach Einstellung dieser Werte erzeugbar ist,
- eine Zuschalteinrichtung zur Zuschaltung des ersten Generators zu dem Netz nach Empfang eines Zuschaltsignales,
- eine Überwachungseinrichtung, durch die die relative Stellung und Bewegungsrichtung eines Kolbens des ersten Dieselmotors in Bezug auf die Stellung und Bewegungsrichtung eines Kolbens des zweiten Dieselmotors ermittelbar und bei Erfüllung vorgegebener Bedingungen ein Überwachungssignal erzeugbar ist, und
- eine Auswerteeinrichtung zur Erzeugung des Zuschaltsignales in Abhängigkeit von dem Synchronisiersignal und dem Überwachungssignal.

Die für das erfindungsgemäße Verfahren genannten Vorteile gelten entsprechend für die erfindungsgemäße Vorrichtung. Von Vorteil ist das Überwachungssignal ein Signal für eine Sperrung einer Zuschaltung und die Auswerteeinrichtung erzeugt das Zuschaltsignal nur, wenn ein Synchronisiersignal und dabei aber kein Überwachungssignal vorliegt.

Bevorzugt generiert die Überwachungseinrichtung kein Überwachungssignal, d.h. es kommt zu einer Zuschaltung des ersten Generators, wenn die relativen Stellungen der beiden Kolben zueinander in einem vorgegebenen Bereich liegen, insbesondere wenn die Stellungen eine Phasenverschiebung von 150° bis 210° aufweisen.

Gemäß einer besonders vorteilhaften Ausgestaltung generiert die Überwachungseinrichtung kein Überwachungssignal, d.h. es kommt zu einer Zuschaltung des ersten Generators, wenn die beiden Kolben genau gegenläufig sind.

Von Vorteil ist durch die Synchronisiereinrichtung das Synchronisiersignal erzeugbar, wenn die Phasenlage der Ausgangsspannung des ersten Generators und die Phasenlage der Netzspannung gleich sind.

Besonders vorteilhaft ist es hierbei, wenn durch die Synchronisiereinrichtung das Synchronisiersignal erzeugbar ist, wenn die Differenz zwischen der Frequenz der Ausgangsspannung und der Frequenz der Netzspannung innerhalb eines vorgegebenen Bereiches, insbesondere zwischen 0,5 und 0,15 Hz, liegt.

Durch die Synchronisiereinrichtung kann bei der Erzeugung des Synchronisiersignals eine Eigenzeit des Schalters berücksichtigbar sein.

Bevorzugt ist die Überwachungseinrichtung durch eine Überbrückung deaktivierbar.

Natürlich kann in all diesen Fällen das Netz zum Zeitpunkt der Zuschaltung des ersten Generators nicht nur allein von dem zweiten Generator, sondern auch von mehreren parallel laufenden Generatoren gespeist werden.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigt:
FIG 1 einen zeitlichen Verlauf der Drehzahlen bzw. Frequenzen der Ausgangsspannungen zweier Dieselgeneratoren DG1, DG2,
FIG 2 einen zeitlichen Verlauf der Schwebefrequenz,
FIG 3 eine Zuschaltungsvorrichtung,
FIG 4 grundsätzlich mögliche Zuschaltzeitpunkte aus Sicht der Dieselgeneratoren DG1 und DG2 und
FIG 5 verschiedene Fälle für Stellungen der Kolben der Dieselgeneratoren DG1 und DG2 bei den Zuschaltzeitpunkten.

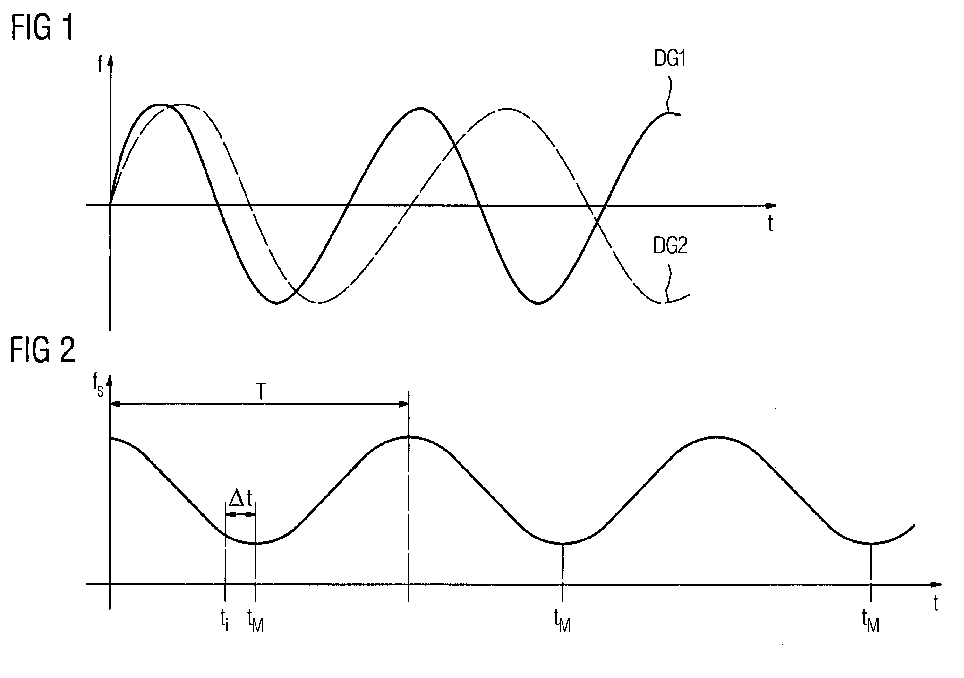

Die FIG 1 zeigt einen zeitlichen Verlauf der Drehzahlen bzw. Frequenzen f der Ausgangsspannungen zweier Dieselgeneratoren DG1, DG2 zur parallelen Einspeisung elektrischer Energie in ein Bordnetz eines Schiffes. Der Dieselgenerator DG1 ist hierbei als einziger Dieselgenerator bereits dem Bordnetz zugeschaltet, d.h. Höhe, Frequenz und Phasenlage der Bordnetzspannung entspricht denjenigen Werten des Dieselgenerators DG1.

Beispielsweise beträgt bei den beiden Dieselgeneratoren DG1, DG2 die Drehzahl des Dieselmotors 514rpm und der Generator ist mit 7 Pol-Paaren ausgestattet (60Hz). Bezogen auf eine Umdrehung des Dieselmotors kann der Generator des Dieselgenerators DG2 dann an 7 Positionen auf das Bordnetz bzw. auf den Dieselgenerator DG1 synchronisiert werden. Bestimmte Stellungen der Kolben zueinander können nach einer Zuschaltung des Dieselgenerators DG 2 zu einer erhöhten Vibration führen, die dann dauerhaft ist, da beide Dieselgeneratoren über das elektrische Netz starr miteinander verbunden sind.

Pro Umdrehung des Dieselgenerators DG2 wird nun ein Bereich vorgegeben, bei dem verstärkte Vibrationen auftreten. Innerhalb dieses Bereiches soll das Zuschalten des Generators nicht erfolgen.

Der generelle Synchronisiervorgang wird gestartet, in dem durch eine Synchronisiereinrichtung des Dieselgenerators DG2 die Drehzahl (und damit die Frequenz auf der elektrischen Seite) des Dieselgenerators DG2 solange verstellt wird, bis sie oberhalb der Drehzahl des bereits zugeschalteten Dieselgenerators DG1 (d.h. Frequenz des Bordnetzes) liegt.

Im zweiten Schritt wird die Drehzahl des Dieselgenerators DG2 durch die Synchronisiereinrichtung soweit verringert, dass die resultierende Drehzahl-Differenzfrequenz auf der elektrischen Seite zwischen 0,5 und 0,15 Hz liegt. Innerhalb dieses Frequenzbandes erfolgt keine weitere Drehzahlverstellung. Eine Messeinheit in der Synchronisiereinrichtung ermittelt, ob a) sich die Differenzfrequenz innerhalb des zulässigen Bereiches befindet und ob b) die Phaselage übereinstimmt. Dies wird dadurch ermittelt, dass das Minimum der Differenzfrequenz f_{S} (Schwebespannung) zu den Zeitpunkten t_{M} bestimmt wird und abzüglich einer Vorhaltzeit (Eigenzeit) Δt zum Zeitpunkt tᵢ für den Schalter ein Synchronisier - Impuls generiert wird (siehe FIG 2). Bei den Minima der Differenzfrequenz fₛ zu den Zeitpunkten t_{M} liegen die möglichen Zuschaltzeitpunkte. Die Eigenzeit Δt beträgt beispielsweise 80ms.

Wie bereits ausgeführt gibt es bezogen auf eine Umdrehung des Dieselmotors sieben Stellungen des Kolbens, an denen der Generator zugeschaltet werden kann. Um nun beim nicht zugelassenen Bereich zuzuschalten, muss der Synchronisier-Impuls innerhalb dieses Bereiches gesperrt werden.

Dazu muss die aktuelle relative Stellung und Bewegungsrichtung der Kolben der beiden Dieselmotoren zueinander betrachtet werden und immer dann, wenn ein Sperrbereich durchlaufen wird, der Synchronisier-Impuls gesperrt werden.

Die Diesel drehen zwar mit 514 Umdrehungen, dies bedeutet 117 msec pro Umdrehung. Für die Betrachtungen sind jedoch nur die relativen Stellungen und Bewegungsrichtungen der beiden Dieselmotoren zueinander relevant.

Während des Synchronisiervorganges beträgt die Differenzfrequenz maximal 0,5Hz, so dass eine minimale Periodendauer T = 2,0 sec beträgt. Ohne einen Synchronisier-Impuls würden beide Dieselmotoren mit dieser Differenzfrequenz zueinander unbegrenzt weiter laufen und alle 2,0 sec das Minimum durchschreiten (mögliche Zuschaltstellungen). Aufgrund der Drehzahldifferenz werden so nacheinander alle 7 für dieses Beispiel möglichen Positionen durchlaufen.

Mit der Kombination des Sperrsignals der relativen Stellungen der Kolben der Dieselmotoren zueinander mit dem Synchronisier-Impuls wird sichergestellt, dass die Kolben der Dieselmotoren nach dem Zuschalten zueinander eine optimale Stellung aufweisen und somit die Vibrationen auf ein Minimum reduziert werden. Bei der Bildung des Sperrsignals wird dabei vorzugsweise sichergestellt, dass dieses Signal entsprechend früh vor Erreichen des Synchronisierpunktes vorhanden ist, da der eigentliche Synchronisier-Impuls immer mit einer entsprechenden Vorhaltzeit, der die Eigenzeit des Schalters berücksichtigt, aktiviert wird (typischerweise: 80ms).

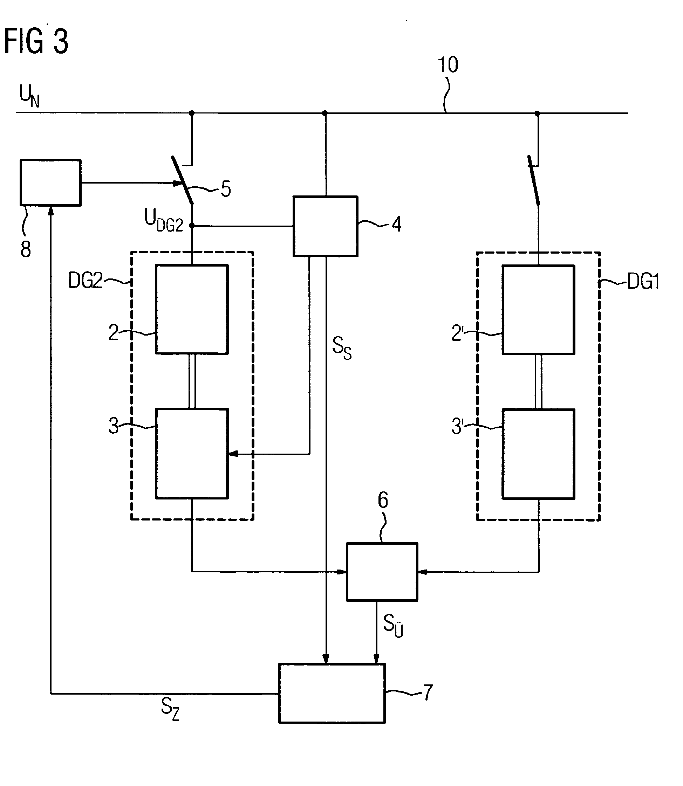

Eine in FIG 3 gezeigte Vorrichtung 1 zur Zuschaltung des Dieselgenerators DG2 (der aus einem Generator 2 und einem Dieselmotor 3 besteht) zu dem Bordnetz 10 eines Schiffes umfasst eine Synchronisiereinrichtung 4, durch die die Frequenz und Phasenlage der Netzspannung UN bzw. des Dieselgenerators DG1 (der aus einem Generator 2' und einem Dieselmotor 3' besteht) erfassbar, die Frequenz und Phasenlage der Ausgangsspannung U_{DG2} des Dieselgenerators DG2 in Bezug auf die Frequenz und Phasenlage der Netzspannung UN durch Veränderung der Drehzahl des Dieselmotors 3 des Dieselgenerators DG2 auf Werte einstellbar ist, die innerhalb vorgegebener Grenzen liegen, und ein Synchronisiersignal S_{S} nach Einstellung dieser Werte erzeugbar ist.

Weiterhin umfasst sie einen Schalter 5 zur Zuschaltung des Generators 2 des Dieselmotors DG2 zu dem Netz durch eine Zuschalteinrichtung 8 nach Empfang eines Zuschaltsignals S_{Z}.

Durch eine Überwachungseinrichtung 6 ist die Stellung und Bewegungsrichtung der Kolben des Dieselmotors 3' des Dieselgenerators DG1 in Bezug auf die Stellung und Bewegungsrichtung der Kolben des Dieselmotors 3 des Dieselgenerators DG2 ermittelbar und bei Erfüllung vorgegebener Bedingungen, bei denen unerwünscht hohe Vibrationen auftreten können, ein Überwachungssignal S_{Ü} erzeugbar. Eine Auswerteeinrichtung 7, die auch in die Überwachungseinrichtung 6 integriert sein kann, dient zur Erzeugung des Zuschaltsignals S_{Z} in Abhängigkeit von dem Synchronisiersignal S_{S} und dem Überwachungssignal S_{Ü}.

Für die Durchführung des Verfahrens wird bevorzugt jeder Dieselmotor 3, 3' mit einem zusätzlichen Impulsgeber, z.B. einem berührungslosen Endschalter, zur Erfassung einer Kolbenstellung im oberen Tot-Punkt und einem zusätzlichen Impulsgeber (vorzugsweise zwischen 70 und 120 Zähne) für die Erfassung der Stellungen und Drehzahl der Welle des Dieselmotors ausgerüstet. Anhand dieser Informationen können die Stellungen und Bewegungsrichtungen der Kolben genau ermittelt werden.

Diese Impulse werden über die Überwachungseinrichtung 6, z.B. eine Simatic S7 Steuerung (Echtzeitmodul mit entsprechenden Impulseingängen und Zählern), erfasst und verarbeitet. Als Ergebnis wird ein Sperrsignal als Überwachungssignal Sü gebildet.

Die Synchronisiereinrichtung 4 für jeden der Dieselgeneratoren DG1, DG2 kann unverändert bleiben, wobei das von der Synchronisiereinrichtung 4 erzeugte Synchronisiersignal Ss zu der Auswerteeinrichtung 7 bzw. zu der Überwachungseinrichtung 6 geführt wird, wenn die Auswerteeinrichtung 7 in die Überwachungseinrichtung 6 integriert ist. In der Auswerteeinrichtung 7 wird das Synchronisiersignal S_{S} mit dem Sperrsignal verknüpft und dann an einem Ausgang das Zuschaltsignal S_{Z} für einen Ein-Kontakt des Schalters 5 erzeugt. Aufgrund der geringen Bearbeitungszeit innerhalb des Echtzeitmoduls (< 1 msec) der Überwachungseinrichtung 6 erfolgt hierbei keine zusätzliche Verzögerung des Synchronisier - Impulses für den Schalter 5.

Um sicherzustellen, dass ein Bediener ggf. auch zu jeder Zeit zusynchronisieren kann, ohne auf die mechanische Position der Kolben zueinander Rücksicht zu nehmen, kann mit Hilfe eines zusätzlichen Schalters ggf. die Überwachungseinrichtung 6 überbrückt und somit deaktiviert werden.

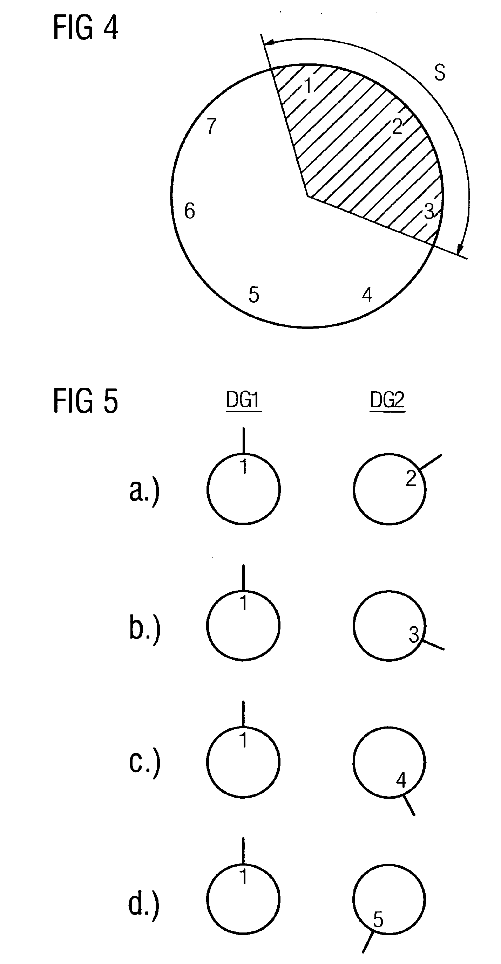

FIG 4 und FIG 5 zeigen in einer Art stroboskopischer Betrachtung beispielhaft mögliche Zuschaltpunkte des Dieselgenerators DG2 zu dem Netz. Wie in FIG 4 dargestellt, sind grundsätzlich sieben unterschiedliche Synchronisierstellungen zwischen den Kolben der Dieselmotoren 3, 3' möglich, wobei jedoch die Stellungen 1, 2 und 3 im Sperrbereich S liegen, d.h. zu unerwünscht hohen Vibrationen führen.

Bei den in FIG 5 gezeigten Fällen a) und b) liegt zwar eine elektrische Synchronisierung vor, aber da sich die Stellungen der Kolben im mechanischen Sperrbereich S befinden (siehe FIG 4), kann nicht zugeschaltet werden.

Bei den in FIG 5 gezeigten Fällen c) und d) kann dagegen zugeschaltet werden, da die Stellungen der Kolben außerhalb des Sperrbereichs S liegen, d.h. auch die mechanische Positionierung stimmt.

## Patentansprüche

1. Verfahren zur Zuschaltung eines von einem ersten Dieselmotor (3) angetriebenen ersten Generators (2) zu einem elektrischen Netz (10), insbesondere einem Bordnetz eines Schiffes, wobei das elektrische Netz (10) von einem zweiten Generator (2') gespeist wird, der von einem zweiten Dieselmotor (3') angetrieben wird, wobei der Zeitpunkt der Zuschaltung des ersten Generators (2) in Abhängigkeit von der Frequenz und Phasenlage der Ausgangsspannung des ersten Generators (2) in Bezug auf die Frequenz und Phasenlage des Netzes (10) gewählt wird, **dadurch gekennzeichnet, dass** der Zeitpunkt der Zuschaltung zusätzlich in Abhängigkeit von der relativen Stellung und Bewegungsrichtung eines Kolbens des ersten Dieselmotors (3) in Bezug auf die Stellung und Bewegungsrichtung eines Kolbens des zweiten Dieselmotors (3') gewählt wird.

2. Verfahren nach einem der vorhergehenden Ansprüche,
**dadurch gekennzeichnet, dass** zum Zeitpunkt der Zuschaltung die relativen Stellungen der beiden Kolben zueinander in einem vorgegebenen Bereich liegen, insbesondere dass die Stellungen eine Phasenverschiebung von 150° bis 210° aufweisen.

3. Verfahren nach einem der vorhergehenden Ansprüche,
**dadurch gekennzeichnet, dass** zum Zeitpunkt der Zuschaltung die beiden Kolben genau gegenläufig sind.

4. Verfahren nach einem der vorhergehenden Ansprüche,
**dadurch gekennzeichnet, dass** zum Zeitpunkt der Zuschaltung die Phasenlage der Ausgangsspannung des ersten Generators (2) und die Phasenlage der Netzspannung (U_{N}) gleich sind.

5. Verfahren nach einem der vorhergehenden Ansprüche,
**dadurch gekennzeichnet, dass** zum Zeitpunkt der Zuschaltung die Differenz zwischen der Frequenz der Ausgangsspannung des ersten Generators (2) und der Frequenz der Netzspannung (U_{N}) innerhalb eines vorgegebenen Bereiches, insbesondere zwischen 0,5 und 0,15 Hz, liegt.

6. Verfahren nach einem der vorhergehenden Ansprüche,
**dadurch gekennzeichnet, dass** die Zuschaltung durch Schließen eines Schalters (5) zwischen einem elektrischen Ausgang des ersten Generators (2) und dem Netz (10) erfolgt.

7. Verfahren nach einem der vorhergehenden Ansprüche,
**dadurch gekennzeichnet, dass** der Schalter (5) nach Empfang eines Zuschaltsignales (S_{Z}) geschlossen wird, wobei bei der Generierung des Zuschaltsignales (S_{Z}) eine Eigenzeit (Δt) des Schalters (5) berücksichtigt wird.

8. Verfahren nach einem der vorhergehenden Ansprüche,
**dadurch gekennzeichnet, dass** die Abhängigkeit des Zeitpunktes der Zuschaltung von der relativen Stellung und Bewegungsrichtung des Kolbens des ersten Dieselmotors (3) in Bezug auf die Stellung und Bewegungsrichtung des Kolbens des zweiten Dieselmotors (3') deaktiviert werden kann.

9. Vorrichtung (1) zur Zuschaltung eines von einem ersten Dieselmotor (3) angetriebenen ersten Generators (2) zu einem elektrischen Netz (10), insbesondere einem Bordnetz eines Schiffes, wobei das elektrische Netz (10) von einem zweiten Generator (2') gespeist wird, der von einem zweiten Dieselmotor (3') angetrieben wird, mit
- einer Synchronisiereinrichtung (4), durch die die Frequenz und Phasenlage der Ausgangsspannung des ersten Generators (2) in Bezug auf die Frequenz und Phasenlage der Netzspannung (UN) durch Veränderung der Drehzahl des ersten Dieselmotors (3) auf Werte einstellbar ist, die innerhalb vorgegebener Grenzen liegen, und durch die ein Synchronisiersignal (S_{S}) nach Einstellung dieser Werte erzeugbar ist, und mit
- einer Zuschalteinrichtung (8) zur Zuschaltung des ersten Generators (2) zu dem Netz (10) nach Empfang eines Zuschaltsignales (S_{Z}),
**gekennzeichnet durch**
- eine Überwachungseinrichtung (6), **durch** die die relative Stellung und Bewegungsrichtung eines Kolbens des ersten Dieselmotors (3) in Bezug auf die Stellung und Bewegungsrichtung eines Kolbens des zweiten Dieselmotors (3') ermittelbar und bei Erfüllung vorgegebener Bedingungen ein Überwachungssignal (S_{Ü}) erzeugbar ist,
- eine Auswerteeinrichtung (7) zur Erzeugung des Zuschaltsignales (S_{Z}) in Abhängigkeit von dem Synchronisiersignal (Ss) und dem Überwachungssignal (S_{Ü}).

10. Vorrichtung (1) nach Anspruch 9,
**dadurch gekennzeichnet, dass** das Überwachungssignal (S_{Ü}) ein Signal für eine Sperrung einer Zuschaltung ist und mittels der Auswerteeinrichtung (7) das Zuschaltsignal (S_{Z}) nur erzeugbar ist, wenn ein Synchronisiersignal (Ss) und kein Überwachungssignal (S_{Ü}) vorliegt.

11. Vorrichtung (1) nach einem der Ansprüche 9 bis 10,
**dadurch gekennzeichnet, dass** mittels der Überwachungseinrichtung (6) ein Überwachungssignal (S_{Ü}) nicht generierbar ist, wenn die relativen Stellungen der beiden Kolben zueinander in einem vorgegebenen Bereich liegen, insbesondere wenn die Stellungen eine Phasenverschiebung von 150° bis 210° aufweisen.

12. Vorrichtung (1) nach einem der Ansprüche 9 bis 11,
**dadurch gekennzeichnet, dass** mittels der Überwachungseinrichtung (6) ein Überwachungssignal (S_{Ü}) nicht generierbar ist, wenn die beiden Kolben genau gegenläufig sind.

13. Vorrichtung (1) nach einem der Ansprüche 9 bis 12,
**dadurch gekennzeichnet, dass** durch die Synchronisiereinrichtung (4) das Synchronisiersignal (S_{S}) erzeugbar ist, wenn die Phasenlage der Ausgangsspannung des ersten Generators (2) und die Phasenlage der Netzspannung (U_{N}) gleich sind.

14. Vorrichtung (1) nach einem der Ansprüche 9 bis 13,
**dadurch gekennzeichnet, dass** durch die Synchronisiereinrichtung (4) das Synchronisiersignal (S_{S}) erzeugbar ist, wenn die Differenz zwischen der Frequenz der Ausgangsspannung des ersten Generators (2) und der Frequenz der Netzspannung (U_{N}) innerhalb eines vorgegebenen Bereiches, insbesondere zwischen 0,5 und 0,15 Hz, liegt.

15. Vorrichtung (1) nach einem der Ansprüche 9 bis 14,
**dadurch gekennzeichnet, dass** durch die Synchronisiereinrichtung (4) bei der Erzeugung des Synchronisiersignals (S_{S}) eine Eigenzeit des Schalters (5) berücksichtigbar ist.

16. Vorrichtung nach einem der Ansprüche 9 bis 15,
**dadurch gekennzeichnet, dass** die Überwachungseinrichtung (6) durch eine Überbrückung deaktivierbar ist.

17. Vorrichtung nach einem der Ansprüche 9 bis 16,
**dadurch gekennzeichnet, dass** das Netz, auf das zugeschaltet wird auch von mehreren parallel laufenden Generatoren gespeist werden kann.

## Claims

1. Method for connecting a first generator (2) driven by a first diesel motor (3) to an electrical power system (10), in particular an on-board power supply of a ship, wherein the electrical power system (10) is energised by a second generator (2'), which is driven by a second diesel motor (3'), wherein the point in time of connecting the first generator (2) is selected as a function of the frequency and phase angle of the output voltage of the first generator (2) in respect of the frequency and phase angle of the electrical power system (10), **characterised in that** the point in time of connection is additionally selected as a function of the relative position and direction of movement of a piston of the first diesel motor (3) in respect of the position and direction of movement of a piston of the second diesel motor (3').

2. Method according to one of the preceding claims,
**characterised in that** at the point in time of connection, the relative positions of the two pistons to each other lie in a predetermined range, in particular that the positions have a phase shift of 150° to 210°.

3. Method according to one of the preceding claims,
**characterised in that** the two pistons are fully counter-rotating at the point in time of connection.

4. Method according to one of the preceding claims,
**characterised in that** at the point in time of connection the phase angle of the output voltage of the first generator (2) and the phase angle of the mains voltage (U_{N}) are identical.

5. Method according to one of the preceding claims,
**characterised in that** at the point in time of connection the difference between the frequency of the output voltage of the first generator (2) and the frequency of the mains voltage (U_{N}) lies within a predetermined range, in particular between 0.5 and 0.15 Hz.

6. Method according to one of the preceding claims,
**characterised in that** the connection takes place by closing a switch (5) between an electrical output of the first generator (2) and the electrical power system (10).

7. Method according to one of the preceding claims,
**characterised in that** after receiving a connection signal (S_{Z}) the switch (5) is closed, wherein a response time (Δt) of the switch (5) is taken into consideration during the generation of the connection signal (S_{Z}).

8. Method according to one of the preceding claims,
**characterised in that** the dependency of the point in time of connection on the relative position and direction of movement of the piston of the first diesel motor (3) in respect of the position and direction of movement of the piston of the second diesel motor (3') can be deactivated.

9. Device (1) for connecting a first generator (2) driven by a first diesel motor (3) to an electrical power system (10), in particular an on-board power supply of a ship, wherein the electrical power system (10) is energised by a second generator (2') which is driven by a second diesel motor (3'), having
- by changing the rotational speed of the first diesel motor (3), a synchronisation facility (4) by means of which the frequency and phase angle of the output voltage of the first generator (2) in respect of the frequency and phase angle of the mains voltage (U_{N}) can be set to values which lie within predetermined limits and by means of which a synchronisation signal (S_{S}) can be generated after setting these values, and having
- a connection facility (8) for connecting the first generator (2) to the electrical power system (10) after receiving a connection signal (S_{Z}),
**characterised by**
- a monitoring facility (6), by means of which the relative position and direction of movement of a piston of the first diesel motor (3) in respect of the position and direction of movement of a piston of the second diesel motor (3') can be determined and if predetermined conditions are fulfilled, a monitoring signal (S_{Ü}) can be generated,
- an evaluation facility (7) for generating the connection signal (S_{Z}) as a function of the synchronisation signal (S_{S}) and the monitoring signal (S_{Ü}).

10. Device (1) according to claim 9,
**characterised in that** the monitoring signal (S_{Ü}) is a signal for blocking a connection and by means of the evaluation facility (7) the connection signal (S_{Z}) can only be generated if a synchronisation signal (S_{S}) is present but not a monitoring signal (S_{Ü})

11. Device (1) according to one of claims 9 to 10,
**characterised in that** a monitoring signal (S_{Ü}) cannot be generated by means of the monitoring facility (6) if the relative positions of the two pistons to each other lie in a predetermined range, in particular if the positions have a phase shift of 150° to 210°.

12. Device (1) according to one of claims 9 to 11,
**characterised in that** a monitoring signal (S_{Ü}) cannot be generated by means of the monitoring facility (6) if the two pistons are fully counter-rotating.

13. Device (1) according to one of claims 9 to 12,
**characterised in that** the synchronisation signal (S_{S}) can be generated by the synchronisation facility (4) if the phase angle of the output voltage of the first generator (2) and the phase angle of the mains voltage (U_{N}) are identical.

14. Device (1) according to one of claims 9 to 13,
**characterised in that** the synchronisation signal (S_{S}) can be generated by the synchronisation facility (4) if the difference between the frequency of the output voltage of the first generator (2) and the frequency of the mains voltage (U_{N}) lies within a predetermined range, in particular between 0.5 and 0.15 Hz.

15. Device (1) according to one of claims 9 to 14,
**characterised in that** a response time of the switch (5) can be taken into consideration by the synchronisation facility (4) during the generation of the synchronisation signal (S_{S}).

16. Device (1) according to one of claims 9 to 15,
**characterised in that** the monitoring facility (6) can be deactivated by short-circuiting.

17. Device (1) according to one of claims 9 to 16,
**characterised in that** the electrical power system, to which a connection is made, can also be energised by a number of generators which run in parallel.

## Revendications

1. Procédé de connexion d'une première génératrice (2) entraînée par un premier moteur (3) diesel à un réseau (10) électrique, notamment à un réseau de bord d'un bâtiment de navigation, le réseau (10) électrique étant alimenté par une deuxième génératrice ( 2' ) qui est entraînée par un deuxième moteur (3' ) diesel, l'instant de la connexion de la première génératrice ( 2 ) étant choisi en fonction de la fréquence et de la position en phase de la tension de sortie de la première génératrice (2 ) par rapport à la fréquence et à la position en phase du réseau (10 ), **caractérisé en ce que** l'on choisit l'instant de la commutation en outre en fonction de la position relative et du sens de déplacement d'un piston du premier moteur (3 ) diesel par rapport à la position et au sens de déplacement d'un piston d'un deuxième moteur ( 3' ) diesel.

2. Procédé suivant l'une des revendications précédentes, **caractérisé en ce qu'**à l'instant de la connexion, les positions relatives des deux pistons l'un par rapport à l'autre sont dans un plage donnée à l'avance, notamment **en ce que** les positions ont un décalage de phase de 150° à 210°.

3. Procédé suivant l'une des revendications précédentes, **caractérisé en ce qu'**à l'instant de la connexion, les deux pistons vont exactement en sens contraire.

4. Procédé suivant l'une des revendications précédentes, **caractérisé en ce qu'**à l'instant de la connexion, la position en phase de la tension de sortie de la première génération (2 ) et la position en phase de la tension (U_{N} ) du réseau sont les mêmes.

5. Procédé suivant l'une des revendications précédentes, **caractérisé en ce qu'**à l'instant de la connexion, la différence entre la fréquence de la tension de sortie de la première génératrice (2 ) et la fréquence de la tension (U_{N} ) du réseau est comprise dans une plage donnée à l'avance, notamment entre 0,5 et 0,15 Hz.

6. Procédé suivant l'une des revendications précédentes, **caractérisé en ce que** la connexion s'effectue par fermeture d'un interrupteur ( 5 ) entre une sortie électrique de la première génératrice (2 ) et le réseau (10 ).

7. Procédé suivant l'une des revendications précédentes, **caractérisé en ce que** l'on ferme l'interrupteur (5 ) après la réception d'un signal ( S_{Z} ) de connexion, un temps ( Δt ) propre de l'interrupteur (5 ) étant pris en compte lors de la production du signal (S_{Z} ) de connexion.

8. Procédé suivant l'une des revendications précédentes, **caractérisé en ce que** l'on peut désactiver la dépendance de l'instant de la connexion de la position relative et du sens de déplacement du piston du premier moteur (3 ) diesel par rapport à la position et au sens de déplacement du piston du deuxième moteur (3' ) diesel.

9. Dispositif ( 1 ) de connexion d'une première génératrice (2 ) entraînée par un premier moteur (3 ) diesel à un réseau (10 ) électrique, notamment un réseau de bord d'un bâtiment de navigation, dans lequel le réseau ( 10 ) électrique est alimenté par une deuxième génératrice (2' ) qui est entraînée par un deuxième moteur (3' ) diesel, comprenant
- un dispositif ( 4 ) de synchronisation, par lequel la fréquence et la position en phase de la tension de sortie de la première génératrice (2 ), par rapport à la fréquence et à la position en phase de la tension ( UN ) du réseau peuvent, en modifiant la vitesse de rotation du premier moteur ( 3 ) diesel, être réglées à des valeurs, qui se trouvent dans des limites données à l'avance, et par lequel un signal (S_{S} ) de synchronisation peut être produit après réglage de ces valeurs,
et comprenant
- un dispositif ( 8 ) de connexion de la première génératrice ( 2 ) au réseau ( 10 ) après réception d'un signal ( S_{Z} ) de connexion,
**caractérisé par**
- un dispositif ( 6 ) de contrôle, par lequel la position relative et le sens de déplacement d'un piston du premier moteur ( 3 ) diesel, par rapport à la position et au sens de déplacement d'un piston du deuxième moteur ( 3' ) diesel, peuvent être déterminés et, si des conditions données à l'avance sont satisfaites, un signal (S_{Ü} ) de contrôle peut être produit,
- un dispositif ( 7 ) d'exploitation pour produire le signal ( S_{Z} ) de connexion en fonction du signal ( S_{S} ) de synchronisation et du signal (S_{Ü} ) de contrôle.

10. Dispositif ( )1 ) suivant la revendication 9,
**caractérisé en ce que** le signal ( S_{Ü} ) est un signal de blocage d'une connexion et le signal ( S_{Z} ) de connexion ne peut être produit au moyen du dispositif ( 7 ) d'exploitation, que s'il y a un signal ( S_{S} ) de synchronisation et s'il n'y a pas de signal ( S_{Ü} ) de contrôle.

11. Dispositif ( 1 ) suivant l'une des revendications 9 à 10, **caractérisé en ce qu'**un signal ( S_{Ü} ) de contrôle ne peut pas être produit au moyen du dispositif ( 6 ) de contrôle si les positions relatives des deux pistons l'un par rapport à l'autre se trouvent dans une plage donnée à l'avance, notamment lorsque les positions ont un décalage de phase de 150° à 210°.

12. Dispositif ( 1 ) suivant l'une des revendications 9 à 11, **caractérisé en ce qu'**un signal ( S_{Ü} ) de contrôle ne peut pas être produit au moyen du dispositif ( 6 ) de contrôle, si les deux pistons vont exactement en sens contraire.

13. Dispositif ( 1 ) suivant l'une des revendications 9 à 12, **caractérisé en ce que** le signal ( S_{S} ) de synchronisation peut être produit par le dispositif ( 4 ) de synchronisation, si la position en phase de la tension de sortie de la première génératrice ( 2 ) et la position en phase de la tension ( U_{N} ) sont les mêmes.

14. Dispositif ( 1 ) suivant l'une des revendications 9 à 13, **caractérisé en ce que** le signal ( S_{S} ) de synchronisation peut être produit par le dispositif ( 4 ) de synchronisation, si la différence entre la fréquence de la tension de sortie de la première génératrice ( 2 ) et la fréquence de la tension ( U_{N} ) du réseau sont dans une plage donnée à l'avance, notamment entre 0,5 et 0,15 Hz.

15. Dispositif ( 1 ) suivant l'une des revendications 9 à 14, **caractérisé en ce qu'**il peut être pris en compte par le dispositif ( 4 ) de synchronisation un temps propre de l'interrupteur ( 5 ) lors de la production du signal ( S_{S} ) de synchronisation.

16. Dispositif ( 1 ) suivant l'une des revendications 9 à 15, **caractérisé en ce que** le dispositif ( 6 ) de contrôle peut être désactivé par un shunt.

17. Dispositif ( 1 ) suivant l'une des revendications 9 à 16, **caractérisé en ce que** le réseau auquel on se connecte peut être alimenté aussi par plusieurs génératrices fonctionnant en parallèle.
